(19) Europäisches Patentamt
European Patent Office
Office européen des brevets

(11) Veröffentlichungsnummer: **0 054 515**
**A1**

(12) # EUROPÄISCHE PATENTANMELDUNG

(21) Anmeldenummer: **81810491.1**

(22) Anmeldetag: **11.12.81**

(51) Int. Cl.$^3$: **C 09 B 62/20**
D 06 P 1/38

(30) Priorität: **17.12.80 CH 9302/80**

(43) Veröffentlichungstag der Anmeldung:
**23.06.82 Patentblatt 82/25**

(84) Benannte Vertragsstaaten:
**CH DE FR GB LI**

(71) Anmelder: **CIBA-GEIGY AG**
**Patentabteilung Postfach**
**CH-4002 Basel(CH)**

(72) Erfinder: **Seitz, Karl, Dr.**
**Schützenweg 9**
**CH-4104 Oberwil(CH)**

(72) Erfinder: **Hoegerle, Karl, Dr.**
**Reinacherstrasse 68**
**CH-4053 Basel(CH)**

(54) **Reaktivfarbstoffe, deren Herstellung und Verwendung.**

(57) Reaktivfarbstoffe der Formel

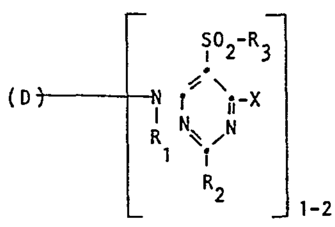

(1),

worin D der Rest eines organischen Farbstoffes der Mono- oder Polyazo-, Metallkomplexazo-, Anthrachinon-, Phthalocyanin-, Formazan-, Azomethin-, Nitroaryl-, Dioxazin-, Phenazin- oder Stilbenreihe, $R_1$ Wasserstoff oder gegebenenfalls substituiertes $C_1$-$C_4$-Alkyl, $R_2$ und $R_3$ unabhängig voneinander geradkettig oder verzweigtes $C_1$-$C_5$-Alkyl und X Fluor, Chlor oder Brom sind; Verfahren zur ihrer Herstellung.

Die Reaktivfarbstoffe eignen sich zum Färben und Bedrucken cellulose-haltiger oder stickstoffhaltiger Materialien.

EP 0 054 515 A1

CIBA-GEIGY AG
Basel (Schweiz)

1-13196/ZFO/=

Reaktivfarbstoffe, deren Herstellung und Verwendung

Reaktivfarbstoffe sind bis heute in grosser Zahl bekannt geworden. Jedoch lassen deren applikatorische Eigenschaften, insbesondere deren Anwendbarkeit für verschiedene Färbeverfahren vielfach zu wünschen übrig. Es bestand daher die Aufgabe, neue Reaktivfarbstoffe mit applikatorisch grösserer Anwendungsbreite zu finden. Es hat sich gezeigt, dass die weiter unten definierten neuen Reaktivfarbstoffe diese Aufgabe weitgehend erfüllen.

Gegenstand der Erfindung sind somit Reaktivfarbstoffe der Formel

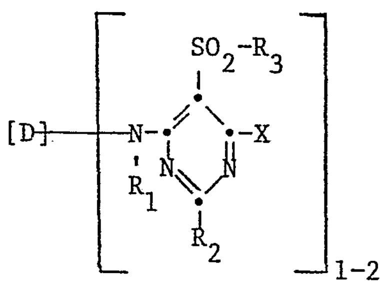

(1) ,

worin D der Rest eines organischen Farbstoffs der Mono-oder Polyazo-, Metallkomplexazo-, Anthrachinon-, Phthalocyanin-, Formazan-, Azomethin-, Nitroaryl-, Dioxazin-, Phenazin- oder Stilbenreihe, $R_1$ Wasserstoff oder gegebenenfalls substituiertes $C_1$-$C_4$-Alkyl, $R_2$ und $R_3$ unabhängig voneinander geradkettig oder verzweigtes $C_1$-$C_5$-Alkyl und X Fluor, Chlor oder Brom ist.

Wichtige Untergruppen der Reaktivfarbstoffe der Formel (1) sind

a) Reaktivfarbstoffe der Formel

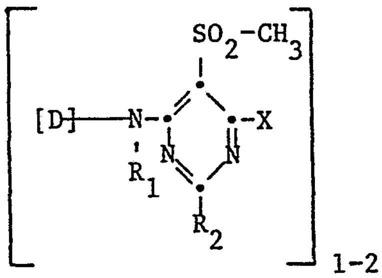

(2) ,

worin D, $R_1$, $R_2$ und X die unter Formel (1) angegebenen Bedeutungen haben.

b) Reaktivfarbstoffe der Formel (2), worin D, $R_1$ und $R_2$ die unter Formel (1) angegebenen Bedeutungen haben, und X Chlor ist.

c) Reaktivfarbstoffe der Formel (2), worin D und $R_1$ die unter Formel (1) angegebenen Bedeutungen haben, $R_2$ Methyl, Aethyl oder Isopropyl und X Chlor ist.

d) Reaktivfarbstoffe der Formel (2), worin D und $R_1$ die unter Formel (1) angegebenen Bedeutungen haben, $R_2$ Methyl und X Chlor ist.

e) Reaktivfarbstoffe der Formel (2), worin D der Rest eines Mono- oder Disazofarbstoffes ist.

f) Reaktivfarbstoffe der Formel (2), worin D der Rest eines Metallkomplexazofarbstoffes der Benzol- oder Naphthalinreihe ist, und $R_1$, $R_2$ und X die unter Formel (1) angegebenen Bedeutungen haben.

g) Reaktivfarbstoffe der Formel (2), worin der Rest D ein 1:1-Kupferkomplexmonoazofarbstoff der Benzol- oder Naphthalinreihe ist, und das Kupferatom an jeweils eine metallisierbare Gruppe in ortho-Position zur Azobrücke gebunden ist und $R_1$ und $R_2$ die unter Formel (1) angegebenen Bedeutungen haben und X Chlor ist.

Bevorzugt sind insbesondere

h) Reaktivstoffe der Formel

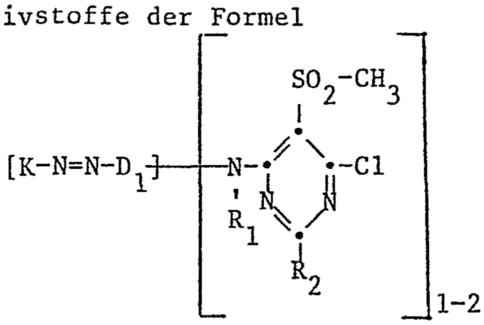

(3) ,

worin $D_1$ der Rest einer Diazokomponente der Benzol- oder Naphthalinreihe und K der Rest einer Kupplungskomponente der Benzol- oder Naphthalinreihe oder der heterocyclischen Reihe ist, und der Reaktivrest an die Diazokomponente oder an die Kupplungskomponente gebunden ist, oder je ein Reaktivrest sowohl an die Diazokomponente als auch an die Kupplungskomponente gebunden ist und worin $R_1$ und $R_2$ die unter Formel (1) angegebenen Bedeutungen haben.

Bevorzugt sind ferner

i) Reaktivfarbstoffe der Formel

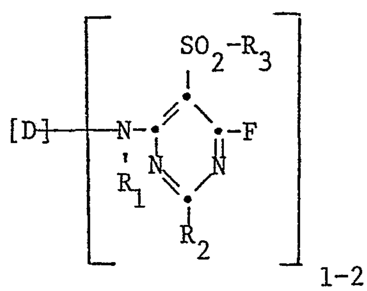

(4) ,

worin D, $R_1$, $R_2$ und $R_3$ die unter Formel (1) angegebenen Bedeutungen haben.

j) Reaktivfarbstoffe der Formel (4), worin D der Rest eines Mono- oder Disazofarbstoffes ist.

k) Reaktivfarbstoffe der Formel

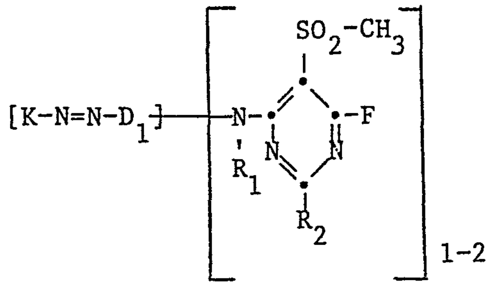

(5) ,

worin $D_1$ der Rest einer Diazokomponente der Benzol- oder Naphthalinreihe und K der Rest einer Kupplungskomponente der Benzol- oder Naphthalinreihe oder der heterocyclischen Reihe ist, und $R_1$ Wasserstoff oder gegebenenfalls substituiertes $C_1$-$C_4$-Alkyl und $R_2$ geradkettig oder verzweigtes $C_1$-$C_5$-Alkyl ist, und der Reaktivrest an die Diazokomponente oder an die Kupplungskomponente oder aber je ein Reaktivrest sowohl an die Diazokomponente als auch an die Kupplungskomponente gebunden ist.

l) Reaktivfarbstoffe der Formel (5), worin $D_1$, K und $R_1$ die unter Formel (5) angegebenen Bedeutungen haben und $R_2$ Methyl, Aethyl oder Isopropyl ist.

m) Reaktivfarbstoffe der Formel (5), worin $D_1$, K und $R_1$ die unter Formel (5) angegebenen Bedeutungen haben und $R_2$ Methyl ist.

Ein besonders wertvoller Farbstoff ist der Reaktivfarbstoff der Formel

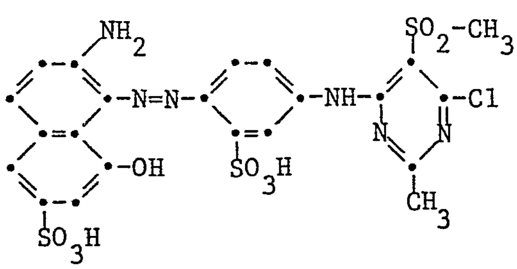

(6) .

Der Rest D in Formel (1) kann in der üblichen Art substituiert sein, insbesondere enthält der Rest D eine oder mehrere Sulfonsäuregruppen.

Als Beispiele für weitere Substituenten am Rest D seien genannt: Alkylgruppen mit 1 bis 4 Kohlenstoffatomen, wie Methyl, Aethyl, Propyl, Isopropyl und Butyl, Alkoxygruppen mit 1 bis 4 Kohlenstoffatomen, wie Methoxy, Aethoxy, Propoxy, Isopropoxy und Butoxy, Acylaminogruppen mit 1 bis 6 Kohlenstoffatomen, wie Acetylamino und Propionylamino, Benzoylamino, Amino, Alkylamino mit 1 bis 4 Kohlenstoffatomen, Phenylamino, Alkoxycarbonyl mit 1 bis 4 Kohlenstoffatomen im Alkoxyrest, Nitro, Cyano, Trifluormethyl, Halogen, wie Fluor, Chlor und Brom, Sulfamoyl, Carbamoyl, Ureido, Hydroxy, Carboxy, Sulfomethyl und Sulfo.

Diejenigen Reaktivfarbstoffe, worin D der Rest eines Azofarbstoffes ist, enthalten als Substituenten insbesondere Methyl, Aethyl, Methoxy, Benzoylamino, Amino, Ureido, Sulfomethyl, Hydroxy und Sulfo.

Als Alkylrest kommt für $R_1$ in Formel (1) ein geradkettiger oder verzweigter Alkylrest in Betracht, der auch substituiert sein kann, z.B. durch Halogen, Hydroxy oder Cyan. Als Beispiele für $R_1$ seien genannt: Methyl, Aethyl, Propyl, Isopropyl, Butyl, Isobutyl, sek.-Butyl, tert.-Butyl und β-Hydroxybutyl.

Als Alkylrest kommt für $R_2$ und unabhängig davon auch für $R_3$ in Formel (1) ein geradkettiger oder verzweigter Alkylrest mit 1 bis 5 Kohlenstoffatomen in Betracht. Als Beispiele für $R_2$ oder $R_3$ seien genannt: Methyl, Aethyl, Propyl, Isopropyl, Butyl, Isobutyl, sek.-Butyl, tert.-Butyl, Pentyl und 2- oder 3-Methylbutyl.

Bevorzugte Alkylreste sind für $R_2$ Methyl, Aethyl und Isopropyl. Vor allem ist $R_2$ und $R_3$ jeweils Methyl.

Die Farbstoffe der Formel (1) sind faserreaktiv, da sie in dem Pyrimidinrest 1 abspaltbares Halogenatom enthalten.

Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Herstellung der Reaktivfarbstoffe der Formel (1) ist dadurch gekennzeichnet, dass man organische Farbstoffe der Formel

$$D - \underset{R_1}{\underset{|}{NH}} \qquad (7)$$

oder Farbstoffvorprodukte mit mindestens einem Aequivalent einer Verbindung der Formel

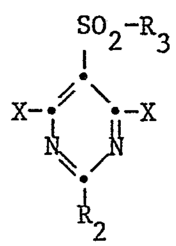

(8) ,

worin D, $R_1$, $R_2$, $R_3$ und X in den Formeln (7) und (8) die unter Formel (1) angegebenen Bedeutungen haben, zu einem Reaktivfarbstoff der Formel (1) kondensiert, und dass man im Falle der Verwendung von Farbstoffvorprodukten, diese in die gewünschten Endfarbstoffe umwandelt.

Falls man von Farbstoffvorprodukten ausgeht, gelangt man zu den Reaktivfarbstoffen der Formel (1), indem man eine Komponente des Farbstoffes der Formel (7), die eine $-\underset{R_1}{\underset{|}{NH}}-$ Gruppe enthält, mit einer Verbindung der Formel (8) kondensiert, und anschliessend mit der anderen Komponente des Farbstoffes der Formel (7) umsetzt.

Die bevorzugten Reaktivfarbstoffe der Formel (2) werden hergestellt, indem man organische Farbstoffe der Formel (7) mit mindestens einem Aequivalent einer Verbindung der Formel

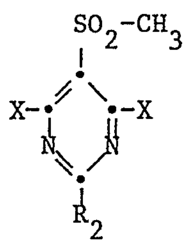

(9) ,

worin $R_2$ und X die unter Formel (1) angegebenen Bedeutungen haben, kondensiert.

Vorzugsweise kondensiert man mit einer Verbindung der Formel

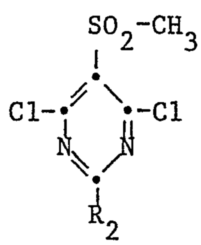

(10) ,

worin $R_2$ die unter Formel (1) angegebene Bedeutung hat.

Bevorzugt verwendet man als Ausgangsstoffe Verbindungen der Formel (10), worin $R_2$ Methyl, Aethyl oder Isopropyl ist. Vor allem ist $R_2$ die Methylgruppe.

Vorzugsweise verwendet man ferner Verbindungen der Formel (7), worin D der Rest eines Mono- oder Disazofarbstoffes ist.

Nach der oben beschriebenen Verfahrensvariante, bei welcher man von Farbstoffvorprodukten ausgeht, können die Farbstoffe der Formel (1), worin D der Rest eines aus zwei oder mehr als zwei Komponenten zusammengesetzten organischen Farbstoffes ist, in der Weise hergestellt werden, dass man eine Komponente des Farbstoffes der Formel (7), die eine $-\underset{R_1}{N}H-$ Gruppe enthält, mit einer Verbindung der Formel (8) kondensiert und dann mit der anderen bzw. den übrigen Komponente(n) des Farbstoffes der Formel (7) zu einem Farbstoff der Formel (1) umsetzt.

Beispiele für derartige, aus zwei oder mehr als zwei Komponenten zusammengesetzte organische Farbstoffe sind: Monoazo-, Disazo-, Trisazo-, Tetrazo-, Metallkomplex-, Formazan- und Azomethinfarbstoffe.

Die oben beschriebene Verfahrensvariante ist vor allem wichtig für die Herstellung von Farbstoffen der Formel (1), worin D der Rest eines Azofarbstoffes ist. In diesen kann derjenige Teil des Azofarbstoffrestes, an den der Reaktivrest unmittelbar gebunden ist, entweder der Rest der Diazokomponente oder der Rest der Kupplungskomponente sein. Dadurch ergeben sich zwei Varianten der oben beschriebenen Verfahrensabänderung.

Die eine der beiden Varianten ist dadurch gekennzeichnet, dass man eine Diazokomponente des Farbstoffes, die eine $-\underset{R_1}{N}H-$ Gruppe enthält, mit einer Verbindung der Formel (8), worin beide X Fluor, Chlor oder Brom sind und $R_2$ und $R_3$ die unter Formel (1) angegebenen Bedeutungen haben, kondensiert, das erhaltene Kondensationsprodukt diazotiert und auf eine Kupplungskomponente kuppelt.

Die zweite Variante ist dadurch gekennzeichnet, dass man eine Kupplungskomponente des Farbstoffes, die eine $-\underset{R_1}{N}H-$ Gruppe enthält, mit

einer Verbindung der Formel (8), worin beide X Fluor, Chlor oder Brom sind und $R_2$ und $R_3$ die unter Formel (1) angegebenen Bedeutungen haben, kondensiert, und auf das so erhaltene Kondensationsprodukt eine diazotierte Diazokomponente kuppelt.

Nach dieser Herstellungsvariante können Reaktivfarbstoffe der Formel (1), die zwei Reaktivreste enthalten, hergestellt werden, indem man eine Diazokomponente, die eine $-\underset{R_1}{\underset{|}{N}}H-$ Gruppe enthält, mit einer Verbindung der Formel (8), worin beide X Fluor, Chlor oder Brom sind und $R_2$ und $R_3$ die unter Formel (1) angegebenen Bedeutungen haben, kondensiert, dass man ferner eine Kupplungskomponente, die eine $-\underset{R_1}{\underset{|}{N}}H-$ Gruppe enthält, mit einer Verbindung der Formel (8), worin beide X Fluor, Chlor oder Brom sind, und $R_2$ und $R_3$ die unter Formel (1) angegebenen Bedeutungen haben, kondensiert, und dass man das Kondensationsprodukt der Diazokomponente diazotiert und auf das Kondensationsprodukt der Kupplungskomponente kuppelt, wobei $R_1$, $R_2$, $R_3$ und X im Kondensationsprodukt der Diazokomponente unabhängig von $R_1$, $R_2$, $R_3$ und X im Kondensationsprodukt der Kupplungskomponente sind.

Farbstoffe, die zwei oder mehr als zwei Reaktivreste enthalten, sind auch in der Weise herstellbar, dass man Farbstoffe der Formel (7), die in D weitere $-\underset{R_1}{\underset{|}{N}}H-$ Gruppen enthalten, mit einer entsprechenden Menge des Acylierungsmittels der Formel (8) kondensiert, so dass zwei oder mehr als zwei entsprechende Reste in das Farbstoffmolekül eingeführt werden.

Eine bevorzugte Ausführungsform ist dadurch gekennzeichnet, dass man organische Farbstoffe der Formel

$$[K - N = N - D_1] - [NHR_1]_{1-2} \qquad (11),$$

worin $D_1$ der Rest einer Diazokomponente der Benzol- oder Naphthalinreihe und K der Rest einer Kupplungskomponente der Benzol- oder Naphthalinreihe oder der heterocyclischen Reihe und $R_1$ Wasserstoff oder $C_1$-$C_4$ Alkyl sind, mit Verbindungen der Formel (9), worin X Chlor ist und $R_2$ die unter Formel (1) angegebene Bedeutung hat, kondensiert, wobei die Kondensation an der $-\underset{R_1}{N}H-$ Gruppe der Diazokomponente oder an der $-\underset{R_1}{N}H-$ Gruppe der Kupplungskomponente erfolgt, oder mit zwei Verbindungen der Formel (9), worin X Chlor ist und $R_2$ die unter Formel (1) angegebene Bedeutung hat, kondensiert, wobei die Kondensation an der $-\underset{R_1}{N}H-$ Gruppe der Diazokomponente und an der $-\underset{R_1}{N}H-$ Gruppe der Kupplungskomponente erfolgt.

Ein weiteres bevorzugtes Herstellungsverfahren ist dadurch gekennzeichnet, dass man Verbindungen der Formel (7), worin D der Rest eines Azofarbstoffes der Benzol- oder Naphthalinreihe ist, der metallisierbare Gruppen enthält, mit mindestens einem Aequivalent der Verbindung der Formel (9) und mit schwermetallabgebenden Mitteln umsetzt, wobei $R_1$, $R_2$ und X in den Formeln (7) und (9) die unter Formel (1) angegebenen Bedeutungen haben.

Bevorzugt ist ein Verfahren, nach dem man einen Monoazofarbstoff der Benzol- oder Naphthalinreihe, der in ortho-Position zur Azobrücke metallisierbare Gruppen enthält, mit einer Verbindung der Formel (10) und mit kupferabgebenden Mitteln in beliebiger Reihenfolge zu einem 1:1-Kupferkomplexazofarbstoff umsetzt.

Die bevorzugten Reaktivfarbstoffe der Formel (4) werden hergestellt, indem man organische Farbstoffe der Formel

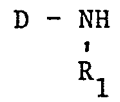

(7)

oder Farbstoffvorprodukte mit Verbindungen der Formel

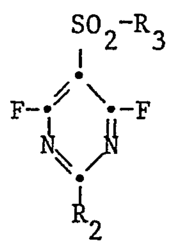

(12)

kondensiert, und dass man im Falle der Verwendung von Farbstoffvorprodukten, diese in die gewünschten Endfarbstoffe umwandelt.

Insbesondere verwendet man dabei Verbindungen der Formel (7), worin D der Rest eines Mono- oder Disazofarbstoffes ist.

Die Herstellung der ebenfalls bevorzugten Reaktivfarbstoffe der Formel

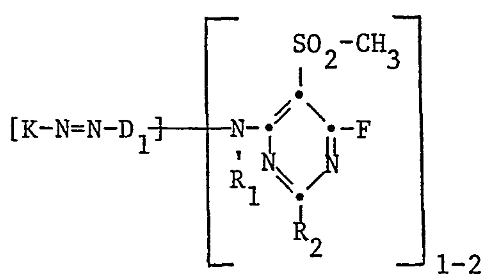

(5) ,

worin $D_1$ der Rest einer Diazokomponente der Benzol- oder Naphthalinreihe und K der Rest einer Kupplungskomponente der Benzol- oder Naphthalinreihe oder der heterocyclischen Reihe ist, und $R_1$ Wasserstoff oder gegebenenfalls substituiertes $C_1$-$C_4$-Alkyl und $R_2$ geradkettig oder verzweigtes $C_1$-$C_5$-Alkyl ist, ist dadurch gekennzeichnet, dass man

einen organischen Farbstoff der Formel

$$[K - N = N - D_1]-[NH-R_1]_{1-2} \qquad (11)$$

mit Verbindungen der Formel

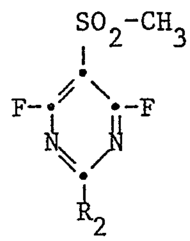

(13) ,

worin K, $D_1$, $R_1$ und $R_2$ in den Formeln (11) und (13) die unter Formel (5) angegebenen Bedeutungen haben, kondensiert, wobei die Kondensation an der $-\underset{R_1}{NH}-$ Gruppe der Diazokomponente oder an der $-\underset{R_1}{NH}-$ Gruppe der Kupplungskomponente erfolgt, oder mit zwei Verbindungen der Formel (13), worin $R_2$ die unter Formel (5) angegebene Bedeutung hat, kondensiert, wobei die Kondensation an der $-\underset{R_1}{NH}-$ Gruppe der Diazokomponente und an der $-\underset{R_1}{NH}-$ Gruppe der Kupplungskomponente erfolgt.

Insbesondere verwendet man dabei Verbindungen der Formel (13), worin $R_2$ Methyl, Aethyl oder Isopropyl ist. Vor allem ist $R_2$ die Methylgruppe.

Die als Ausgangsstoffe verwendeten Farbstoffe der Formel (7) können im Rest D wie weiter vorne beschrieben substituiert sein. Vorzugsweise geht man von organischen Farbstoffen der Formel (7) aus, worin D der Rest eines Azofarbstoffes ist, der als Substituenten Methyl, Aethyl, Methoxy, Benzoylamino, Amino, Ureido, Sulfomethyl, Hydroxy und Sulfo enthalten kann.

Der wertvolle Reaktivfarbstoff der Formel (6) wird in der Weise hergestellt, dass man den durch Kupplung von diazotierter 1-Amino-4-acetylaminobenzol-6-sulfonsäure auf 2-Amino-8-hydroxynaphthalin-6-sulfonsäure und anschliessende Verseifung der Acetylaminogruppe enthaltenen Azofarbstoff mit 4,6-Dichlor-2-methyl-5-methylsulfonylpyrimidin kondensiert.

Die Kondensation der Verbindungen der Formel (8) mit den organischen Farbstoffen der Formel (7) bzw. den eine $-\underset{R_1}{N}H-$ Gruppe enthaltenden diazotierbaren und/oder kupplungsfähigen Komponenten erfolgen vorzugsweise in wässriger Lösung oder Suspension, bei niedriger Temperatur und bei schwach saurem, neutralem bis schwach alkalischem pH-Wert, und so dass im fertigen Farbstoff der Formel (1) noch ein X als abspaltbarer Rest übrig bleibt. Vorteilhaft wird der bei der Kondensation frei werdende Fluor-, Chlor- oder Bromwasserstoff laufend durch Zugabe wässriger Alkalihydroxyde, -carbonate oder -bicarbonate neutralisiert.

Als Ausgangsstoffe zur Herstellung der Reaktivfarbstoffe der Formel (1) seien genannt:

a) <u>organische Farbstoffe der Formel (7)</u>

Farbstoffe der folgenden Strukturtypen

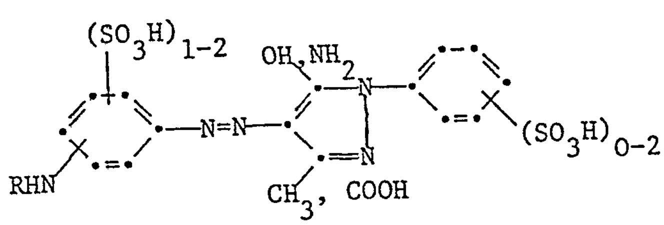

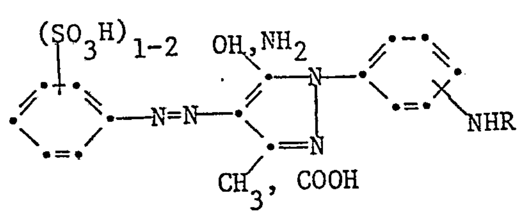

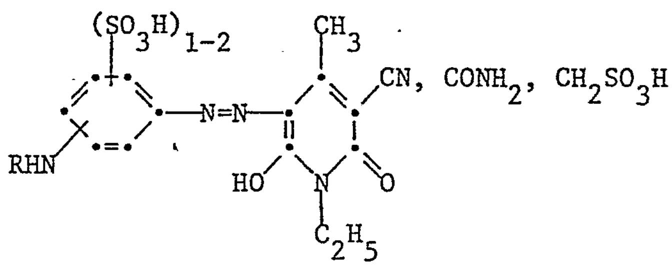

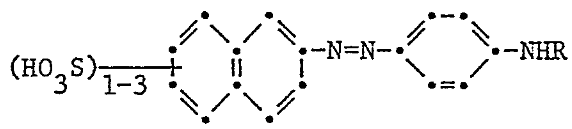

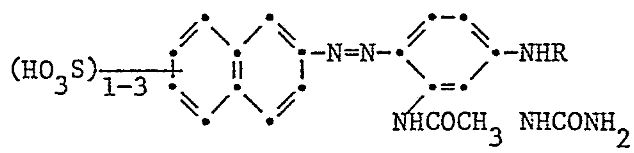

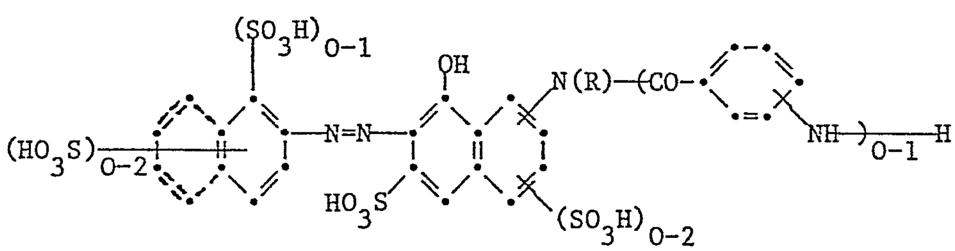

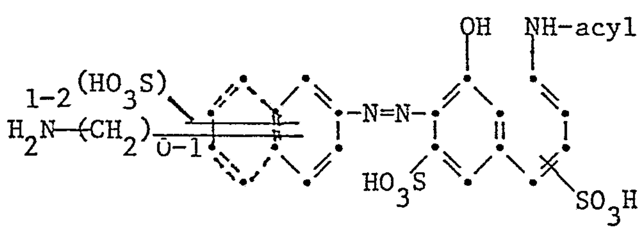

worin acyl z.B. Acetyl oder gegebenenfalls substituiertes Benzoyl ist.

Metallkomplexe von Farbstoffen der Formeln:

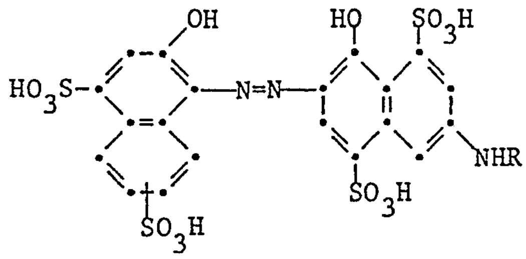

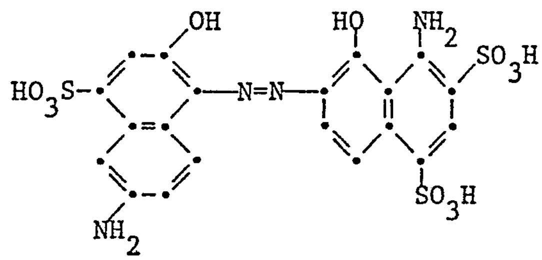

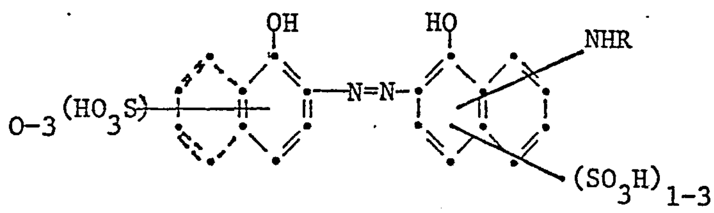

Als Metallatom sind Cu (1:1-Komplex) oder Cr und Co (1:2-Komplex) bevorzugt. Cr- und Co-Komplexe können die Azoverbindung der oben angegebenen Formel einmal oder zweimal enthalten, d.h. sie können symmetrisch oder mit beliebigen anderen Ligandengruppen unsymmetrisch aufgebaut sein.

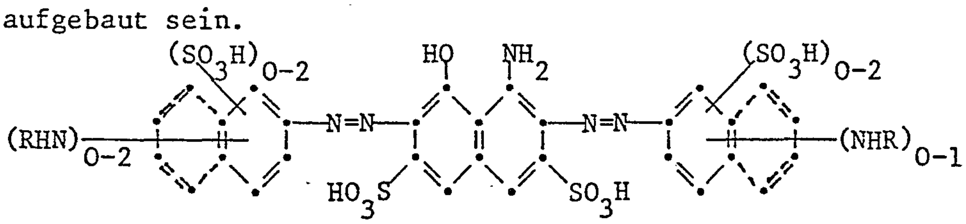

Die durch Strichelungen angedeuteten kondensierten Ringe stehen für alternativ mögliche Naphthalinsysteme.

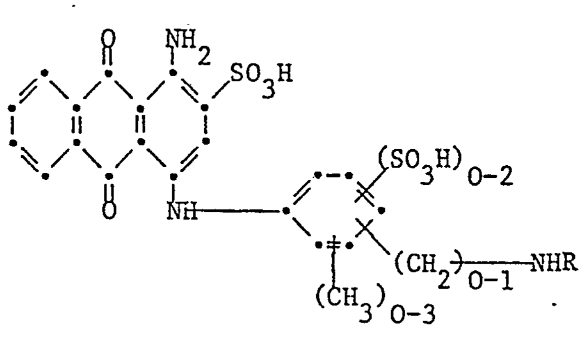

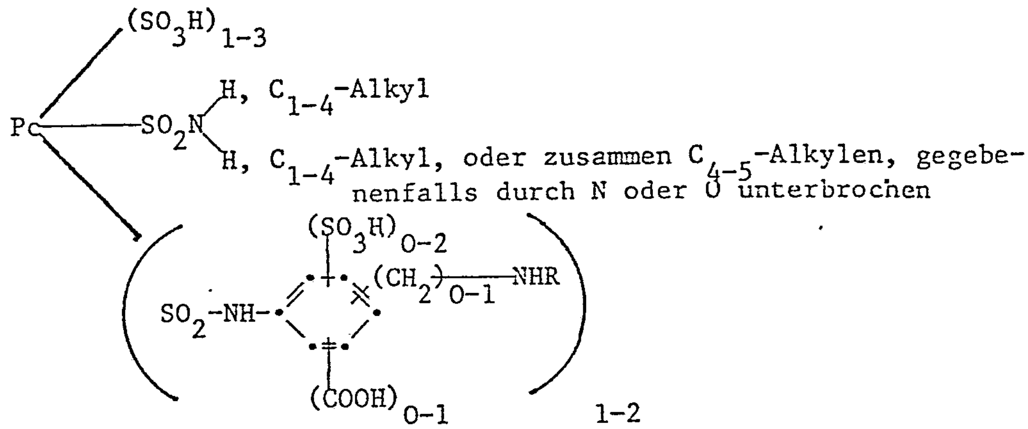

In dieser Formel steht Pc für den Cu- oder Ni-Phthalocyaninrest. Die Gesamtzahl der Substituenten am Pc-Gerüst ist dabei 4.

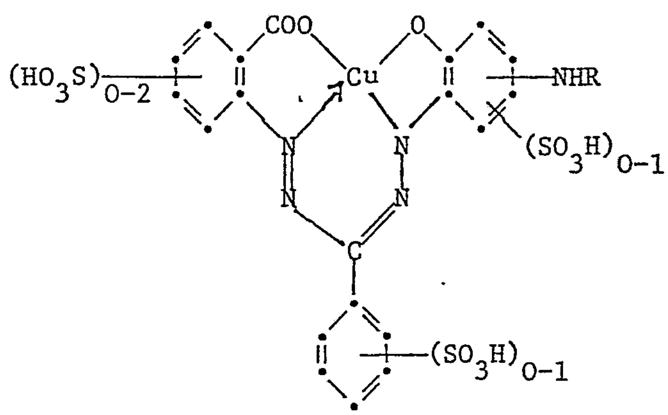

Die Farbstoffe der oben angegebenen Formeln können in den Alkyl- oder Arylresten weitersubstituiert sein, insbesondere durch die bei der Erläuterung von D in Formel (1) genannten Substituenten.

Besonders wichtige Azofarbstoffe der Formel (11) sind die folgenden:

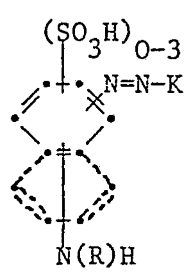

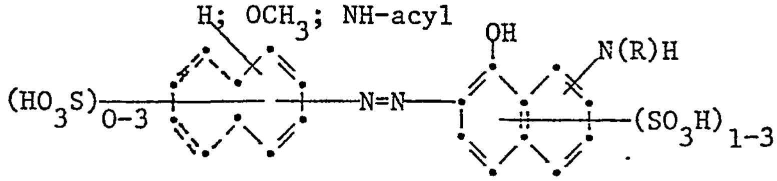

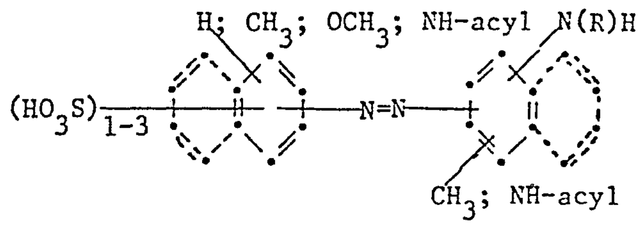

und

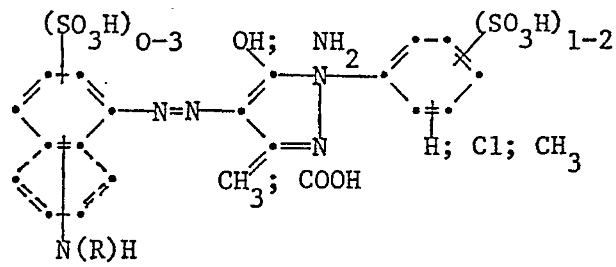

worin K der Rest einer Kupplungskomponente der Benzol-, Naphthalin- oder der heterocyclischen Reihe, acyl ein niedrigmolekularer, höchstens 3 Kohlenstoffatome enthaltender aliphatischer Acylrest oder ein höchstens 8 Kohlenstoffatome enthaltender aromatischer Rest ist, und R die bei der Erläuterung der Formel (1) angegebenen Bedeutungen hat, sowie die Metallkomplex-Azofarbstoffe der Formeln

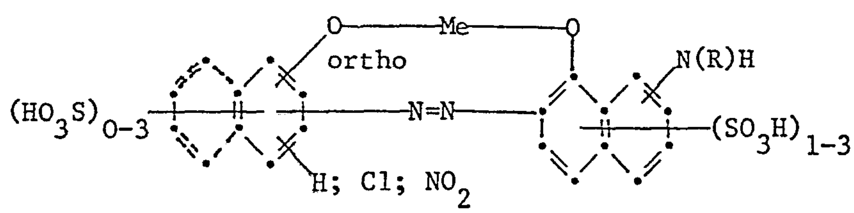

und

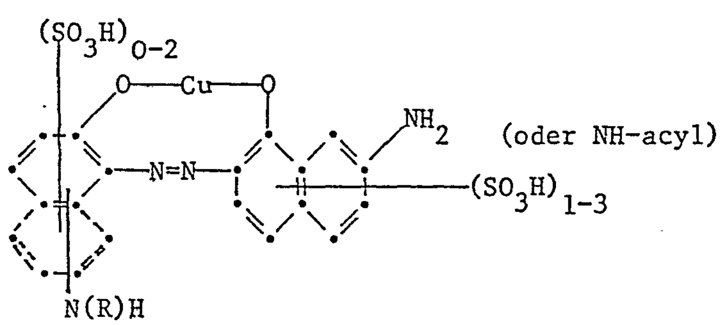

worin R und acyl die oben angegebenen Bedeutungen haben und Me für Cu, Cr oder Co steht.

b) <u>2-Alkyl-5-alkylsulfonyl-4,6-dihalogenpyrimidine der Formel (8)</u>

Die 2-Alkyl-5-alkylsulfonyl-4,6-dihalogenpyrimidine der Formel (8) werden hergestellt, indem man entweder ein Salz eines Dianions der Formel

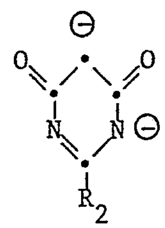

(30)

mit einer Verbindung der Formel

$$Z - SO_2 - R_3 \qquad (31)$$

zu einer Verbindung der Formel

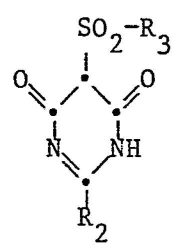

(32)

oder einem Salz einer Verbindung der Formel (32) umsetzt, oder indem man eine Verbindung der Formel

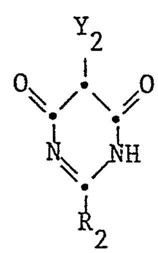

(33)

worin $Y_2$ Fluor, Chlor oder Brom bedeutet,
in Gegenwart eines polaren Lösungsmittels mit einer Verbindung der Formel

$$Z_1 - SO_2 - R_3 \qquad (34)$$

zu einer Verbindung der Formel (32) umsetzt und die gemäss der beiden oben beschriebenen Verfahren erhaltene Verbindung der Formel (32) oder deren Salz durch Behandlung mit einem Chlor, Brom und/oder Fluor einführenden Mittel zu einer Verbindung der Formel (8) umsetzt, oder indem man eine Verbindung der Formel

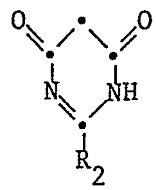

(35)

in Gegenwart eines Chlor, Brom und/oder Fluor einführenden und wasserabspaltenden Mittels mit einer Verbindung der Formel

$$(R_3)_2SO \qquad (36)$$

zu einer Verbindung der Formel

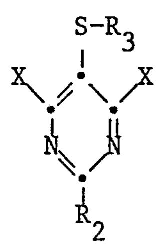

(37)

umsetzt, die Verbindung der Formel (37) mit einem milden Oxidationsmittel zu einer Verbindung der Formel (8) umsetzt und gegebenenfalls einer Umhalogenierung unterwirft. In den obigen Formeln (30) bis (37) haben $R_2$, $R_3$ und X die unter Formel (1) angegebenen Bedeutungen, Z stellt ein Halogenatom oder $-O-SO_2-R_2$ dar und $Z_1$ ist ein Alkalimetall- oder Erdalkalimetallkation.

Als Salze von Dianionen der Formel (30) bzw. von Verbindungen der Formel (32) kommen Salze mit anorganischen oder organischen Basen in Betracht, z.B. Alkalimetall- und Erdalkalimetallsalze sowie quartäre Ammoniumsalze. Als Beispiele seien genannt Natrium-, Kalium- und Tetramethylammoniumsalze.

Die Herstellung der oben erwähnten Salze kann auf an sich bekannte Weise vor der weiteren Umsetzung oder im Reaktionsmedium selbst erfolgen.

Die Ausgangsprodukte der Formeln (30), (31), (33), (34), (35) und (36) sind bekannt oder können nach an sich bekannten Methoden hergestellt werden.

Geeignete Ausgangsprodukte der Formeln (31), (34) und (36) sind beispielsweise Methansulfonsäurechlorid, n-Butansulfonsäurechlorid, Natrium- und Kaliummethansulfinat, -isopropansulfinat, Diäthylsulfoxid und Di-n-pentylsulfoxid.

Die Umsetzung der Salze von Dianionen der Formel (30) mit den Verbindungen der Formel (31) wird zweckmässig in Gegenwart einer starken anorganischen oder organischen Base vorgenommen, wie beispielsweise Alkalimetallhydroxide oder Alkyllithiumverbindungen.

Die obige Umsetzung kann in wässrigem Medium, in einem inerten organischen Lösungsmittel oder einem Gemisch verschiedener organischer Lösungsmittel, in einem Gemisch von Wasser und einem oder mehreren inerten organischen Lösungsmitteln oder auch in einem Lösungsmittel-Zweiphasensystem vorgenommen werden. Als organische Lösungsmittel sind beispielsweise N,N-Dimethylformamid, Aceton, N-Methyl-2-pyrrolidon, Dimethylsulfoxid und Pyridin geeignet. Als Lösungsmittel-Zweiphasensysteme kommen z.B. Wasser/Methylenchlorid oder Wasser/Toluol in Betracht.

Die Umsetzung in wässrigem Medium wird bei einem pH-Wert von 11 oder höher ausgeführt, wobei die Salze von Dianionen der Formel (30) im allgemeinen in situ gebildet werden. Als Basen verwendet man Natrium- oder Kaliumhydroxid.

Für die Umsetzung in organischem Medium verwendet man als Base beispielsweise Natriumhydrid oder Butyllithium.

Die Umsetzung der Salze von Dianionen der Formel (30) mit den Verbindungen der Formel (31) wird zweckmässig bei Temperaturen zwischen -20°C und +100°C und gegebenenfalls in Gegenwart eines Phasentransferkatalysators wie Benzyltriäthylammoniumchlorid durchgeführt.

Nach beendeter Umsetzung fallen die Verbindungen der Formel (32) direkt oder nach Ansäuern der Reaktionslösung, z.B. mit konzentrierter Salzsäure in Form von Salzen oder als freie Säuren aus. Zur Reinigung kann aus Wasser umkristallisiert werden. Die Salze können auf an sich bekannte Weise in die freien 5-Alkylsulfonylderivate überführt werden.

Als polare Lösungsmittel für die Umsetzung von Verbindungen der Formel (33) mit den Alkalimetall- oder Erdalkalimetallsulfinaten der Formel (34) können z.B. N,N-Dimethylformamid, N-Methyl-2-pyrrolidon, Tetramethylharnstoff oder Dimethylsulfoxid verwendet werden. Die Reaktionstemperaturen liegen bei 50 bis 200°C.

Als Chlor, Brom und/oder Fluor einführende und gegebenenfalls Wasser abspaltende Mittel für die Ueberführung von Verbindungen der Formel (32) bzw. deren Salzen in Verbindungen der Formel (8) oder die Umsetzung von Verbindungen der Formel (35) mit Verbindungen der Formel (36) kommen beispielsweise in Betracht: Phosphor(V)-oxichlorid, -bromid und -fluorid, Thionylchlorid oder -bromid und Schwefeltetrafluorid oder aber gemischte Thionylhalogenide wie $SOClF$ oder $SOBrCl$.

Die Ueberführung der Verbindungen der Formel (32) bzw. von Salzen davon in Verbindungen der Formel (8) wird zweckmässig in Gegenwart eines Katalysators wie beispielsweise Triäthylamin oder N,N-Dimethylformamid ausgeführt. Die Katalysatoren werden im allgemeinen in einer Menge von 1-200 Mol% bezogen auf die verwendete Menge der Verbindung der Formel (32) eingesetzt.

Die vorerwähnten Umsetzungen mit einem Chlor, Brom und/oder Fluor und gegebenenfalls wasserabspaltenden Mittel werden in einem inerten organischen Lösungsmittel vorgenommen. Geeignet hierfür sind z.B. Xylole, Nitrobenzol, Dichlormethan und Trichloräthylen. Als Lösungsmittel kann auch überschüssiges Chlor, Brom und/oder Fluor einführendes Mittel, besonders Phosphor(V)oxichlorid, dienen.

Die Umsetzung von Verbindungen der Formel (32) mit Chlor, Brom und/oder Fluor einführenden Mitteln wird bei Temperaturen zwischen 20° und 250°C vorgenommen.

Die Umsetzung von Verbindungen der Formel (35) in Gegenwart eines Chlor, Brom und/oder Fluor einführenden und gleichzeitig dehydratisierenden Mittels mit Verbindungen der Formel (36) wird bei Temperaturen zwischen 0° und 150°C und in Gegenwart eines inerten organischen Lösungsmittels wie Dichlormethan vorgenommen.

Beispiele milder Oxidationsmittel für die Umsetzung der Verbindungen der Formel (37) zu Verbindungen der Formel (8) sind Peressigsäure, 3-Chlorperbenzoesäure, Perbenzoesäure, Wasserstoffperoxid, Natriumperjodat, Perlaurinsäure, Jodbenzodichlorid, N-Chlorsuccinimid, N-Bromsuccinimid und Chlor. Die obige Umsetzung wird zweckmässig in Gegenwart eines inerten Lösungsmittels wie z.B. Dichlormethan, Chloroform, Essigsäure, Essigsäureanhydrid und Wasser vorgenommen. Die Oxidationstemperaturen liegen im allgemeinen zwischen -50°C und +50°C. Aehnliche Oxidationsreaktionen sind beispielsweise in Tetrahedron Letters, 1973, Seite 2365 beschrieben; siehe dazu auch "Organic Compounds of Bivalent Sulfur", Band 2, Seite 64 (Chemical Publishing Co., New York, 1960).

Verbindungen der Formel (8), worin die X Brom- oder Fluoratome sind, lassen sich auch dadurch herstellen, dass man Verbindungen der Formel (8), worin beide X Chloratome sind, bis zum Ersatz von einem oder

allen beiden Chloratomen durch Brom- oder Fluoratome mit einem Bromierungs- oder Fluorierungsmittel, wie Phosphortribromid, wasserfreiem Fluorwasserstoff, Alkalimetallfluoriden oder Kaliumfluorosulfinat, umsetzt.

So können z.B. die Verbindungen der Formel (8), worin die beiden X Chlor bedeuten und $R_2$ und $R_3$ die angegebenen Bedeutungen haben, in die Brom- oder Fluoranalogen übergeführt werden, indem man 5-Alkylsulfonyl-2-alkyl-4,6-dihalogenpyrimidin, z.B. das 5-Methylsulfonyl-2-methyl-4,6-dichlorpyrimidin, durch Umsetzung mit Phosphortribromid, das auch als Lösungsmittel dienen kann, in das entsprechende 5-Methylsulfonyl-2-methyl-4,6-dibrompyrimidin überführt, oder indem man die Chlor-Verbindungen durch Umsetzung mit wasserfreiem Fluorwasserstoff, mit Kaliumfluorosulfinat oder einem Alkalimetallfluorid unverdünnt oder in Gegenwart eines hochsiedenden aprotischen organischen Lösungsmittels in die entsprechende 4,6-Difluorpyrimidinverbindung überführt. Geeignete Lösungsmittel für diese Umhalogenierung sind z.B. aromatische Kohlenwasserstoffe, wie Toluol und Xylole; N,N-Dialkylamide von aliphatischen Monocarbonsäuren der vorerwähnten Art, wie N,N-Dimethylformamid und N,N-Dimethylacetamid; Dialkylsulfoxide, vor allem Dimethylsulfoxid; cyclische Aether und cyclische Amide, wie Tetrahydrofuran, Tetrahydropyran, N-Methyl-2-pyrrolidon und N-Acetyl-2-pyrrolidon; Hexamethylphosphorsäuretriamid (Hexametapol); N,N,N',N'-Tetramethylharnstoff, Tetrahydrothiophendioxid (Sulfolan).

Die Reaktionstemperaturen für die Umhalogenierung liegen zweckmässig zwischen 20° und 250°C und bevorzugt zwischen 50° und 150°C.

Als Beispiele für Verbindungen der Formel (8) seien genannt:

5-Methylsulfonyl-2-methyl-4,6-difluorpyrimidin,
5-Methylsulfonyl-2-methyl-4,6-dichlorpyrimidin,
5-Methylsulfonyl-2-methyl-4,6-dibrompyrimidin.

Bei der Herstellung der bevorzugten Farbstoffe der Formel (1), worin D der Rest eines Azofarbstoffes, insbesondere eines Mono- oder Disazofarbstoffes ist, erfolgt die Diazotierung der eine diazotierbare Aminogruppe enthaltenden Zwischenprodukte in der Regel durch Einwirkung salpetriger Säure in wässrigmineralsaurer Lösung bei tiefer Temperatur, die Kupplung bei schwach sauren, neutralen bis schwach alkalischen pH-Werten.

Die Reaktivfarbstoffe der Formel (1) sind neu, sie zeichnen sich durch eine hohe Reaktivität und hohen Fixiergrad aus.

Sie eignen sich zum Färben und Bedrucken der verschiedensten Materialien, wie Seide, Leder, Wolle, Superpolyamidfasern und Superpolyurethanen, insbesondere aber cellulosehaltiger Materialien faseriger Struktur, wie Leinen, Zellstoff, regenerierte Cellulose und vor allem Baumwolle. Sie eignen sich zum Färben nach dem Foulardfärbeverfahren, wonach die Ware mit wässrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung fixiert werden.

Sie eignen sich auch zum Druck, insbesondere auf Baumwolle, ebenso aber auch zum Bedrucken von stickstoffhaltigen Fasern, z.B. Wolle, Seide, oder Wolle enthaltenden Mischgeweben.

Es empfiehlt sich, die Färbungen und Drucke einem gründlichen Spülen mit kaltem und heissem Wasser, gegebenenfalls unter Zusatz eines dispergierend wirkenden und die Diffusion der nicht fixierten Anteile fördernden Mittels zu unterwerfen.

In den nachfolgenden Beispielen bedeuten die Teile Gewichtsteile, und die Temperaturen sind in Celsiusgraden angegeben.

Beispiel 1: 2-Methyl-5-methylthio-4,6-dichlorpyrimidin

37,8 g (0,3 Mol) 2-Methyl-4,6-dihydroxypyrimidin werden in 150 ml Phosphor(V)oxichlorid und 100 ml Dichlormethan suspendiert. Innerhalb von 2 1/2 Stunden werden unter Kühlung bei 20-25° 26,6 g (0,34 Mol) Dimethylsulfoxid zugetropft. Das Reaktionsgemisch wird über Nacht bei Raumtemperatur gerührt und dann langsam erwärmt. Bei 50-55° setzt Chlorwasserstoffentwicklung ein. Das Dichlormethan wird dabei abdestilliert, und die Lösung wird während 12 Stunden am Rückfluss gekocht. Dann wird der Kolbeninhalt auf Wasser gegossen und die Temperatur durch Eiszugabe auf ca. 25° gehalten. Das Produkt wird mit Dichlormethan extrahiert, die Lösung über Magnesiumsulfat getrocknet, eingedampft, und der Rückstand wird im Hochvakuum destilliert. Das Destillat vom Sdp. 50-64°/0,13 mbar gibt aus Petroläther farblose Kristalle vom Smp. 59-60°.

Analyse:

berechnet C: 34,46%; H: 2,89%; N: 13,40%; S: 15,33%; Cl: 33,91%

gefunden C: 34,52%; H: 2,82%; N: 13,49%; S: 14,96%; Cl: 34,26%.

2-Methyl-5-methylsulfonyl-4,6-dichlorpyrimidin

20,9 g (0,1 Mol) 2-Methyl-5-methylthio-4,6-dichlor-pyrimidin werden in einer Lösung von 10 ml Acetanhydrid in 150 ml Essigsäure gelöst. Unter gutem Rühren werden innerhalb einer Stunde 42 g 40%-ige (0,22 Mol) Peressigsäure zugetropft. Die Temperatur wird durch leichte Kühlung auf 40-45° gehalten. Die Reaktionslösung wird noch 4-5 Stunden bei dieser Temperatur gehalten, bei Raumtemperatur über Nacht ausgerührt und dann auf 15° abgekühlt. Der Niederschlag wird filtriert und aus Petroläther umkristallisiert. Das Produkt hat den Smp. 138-140°.

Beispiel 2: 8,76 Teile des Farbstoffes der Formel

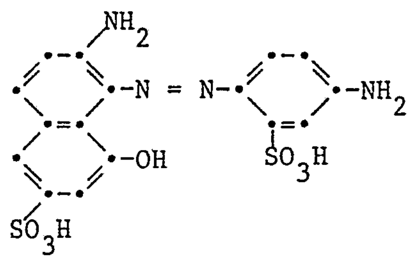

werden in 300 Teilen Wasser neutral gelöst und mit 6,68 Teilen Natriumacetat versetzt. Zur erhaltenen Lösung gibt man bei Zimmertemperatur unter kräftigem Rühren eine Lösung von 5,3 Teilen 2-Methyl-4,6-dichlor-5-methylsulfonylpyrimidin in 40 Teilen Aceton. Nach vollständiger Acylierung wird die Lösung klärfiltriert. Der entstandene Reaktivfarbstoff wird mit Kochsalz ausgesalzen, abfiltiert, mit einer gesättigten Lösung von Natriumdihydrogenphosphat gepuffert und im Vakuum bei ca. 50° getrocknet.

Der so erhaltene Farbstoff färbt Baumwolle nach dem Pad-Steam-Verfahren in blaustichig roten Tönen.

In der folgenden Tabelle sind weitere aminogruppenhaltige Chromophore aufgeführt, die mit 2-Methyl-4,6-dichlor-5-methylsulfonylpyrimidin zu Reaktivfarbstoffen umgesetzt werden können, die Baumwolle in den angegebenen Nuancen färben.

Tabelle 1

| | |
|---|---|
| 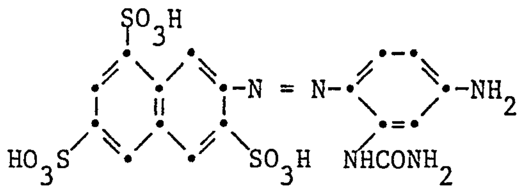 | goldgelb |
| 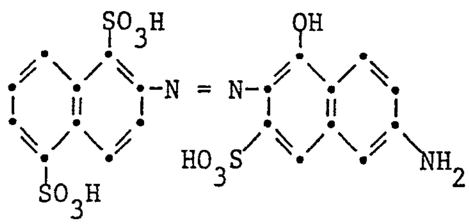 | orange |
| 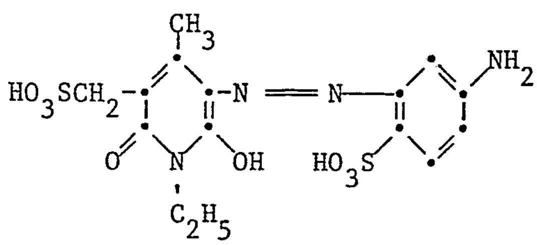 | grünstichig gelb |
| 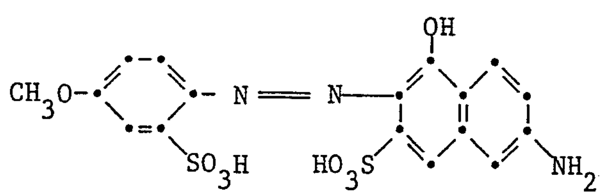 | scharlach |
| 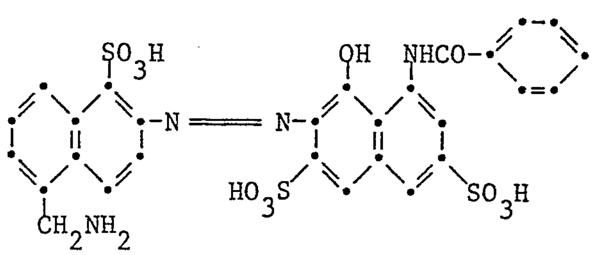 | rot |
| 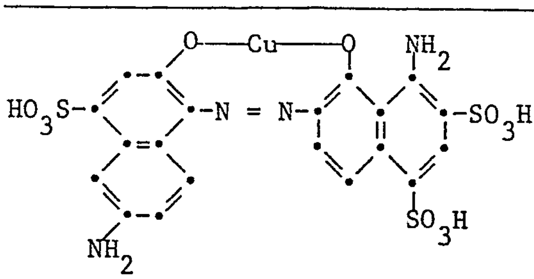 | blau |

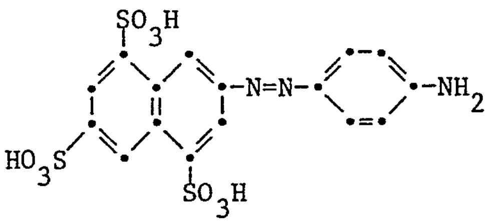

gelb

---

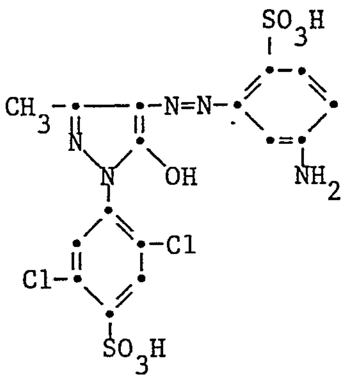

grünstichig gelb

---

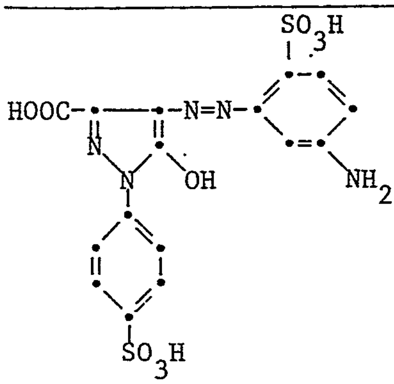

grünstichig gelb

---

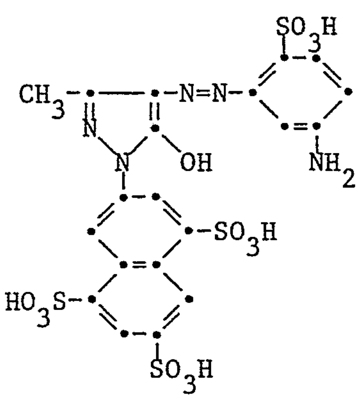

grünstichig gelb

---

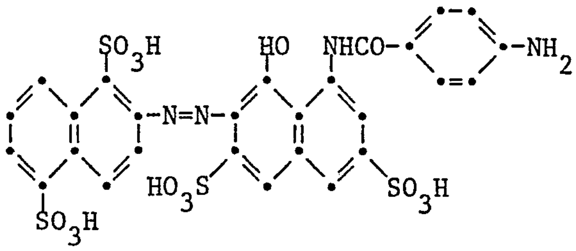

blaustichig rot

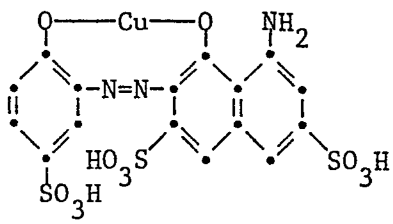

violett

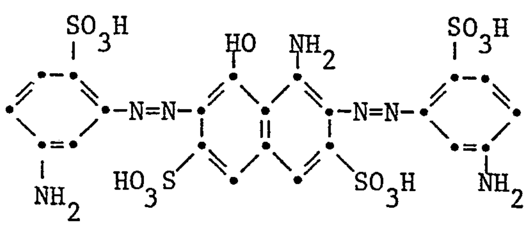

grünstichig marineblau

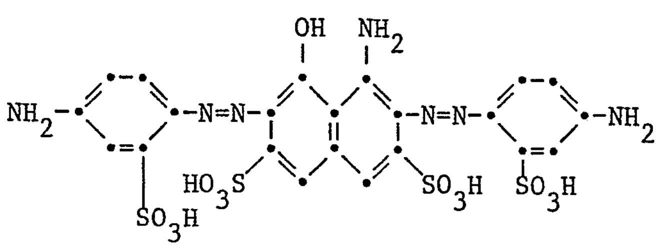

grünblau

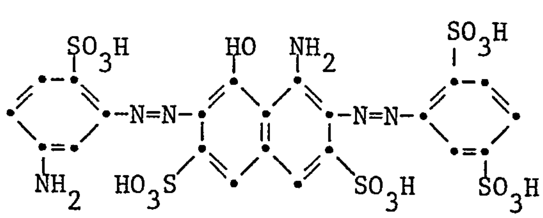

marineblau

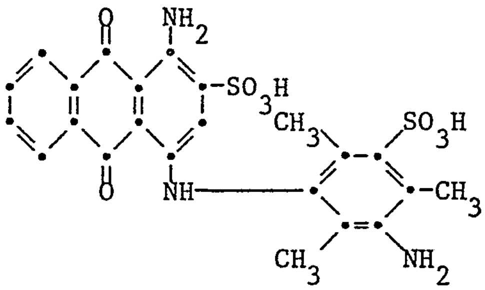

königsblau

---

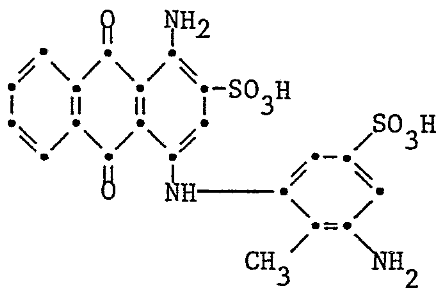

blau

---

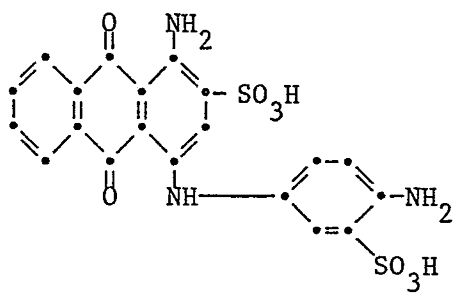

grünstichig blau

---

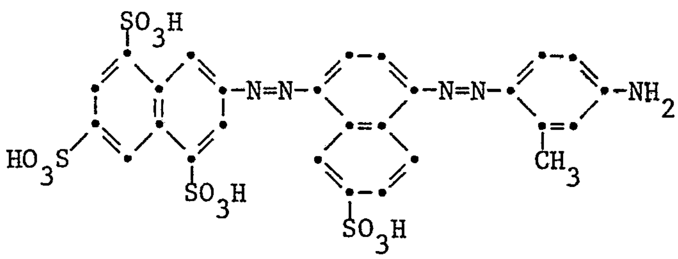

braun

---

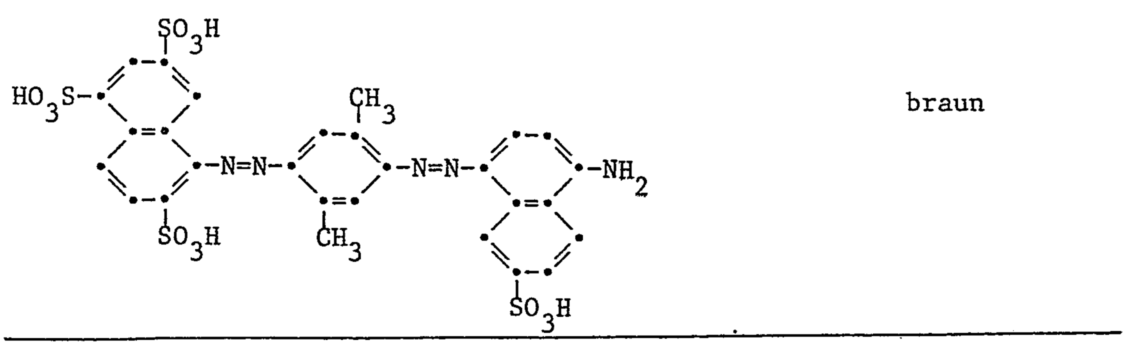

braun

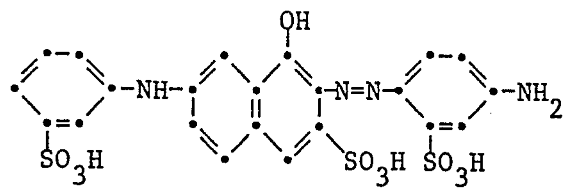

braun

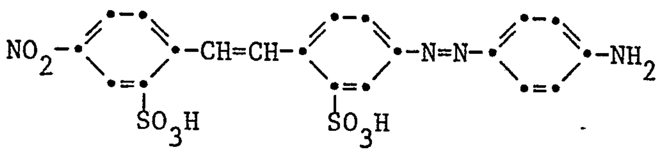

gelb

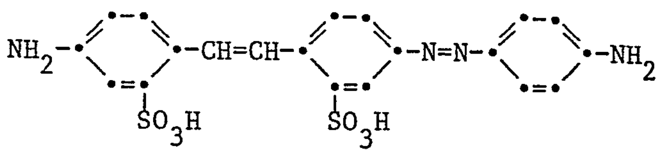

gelb

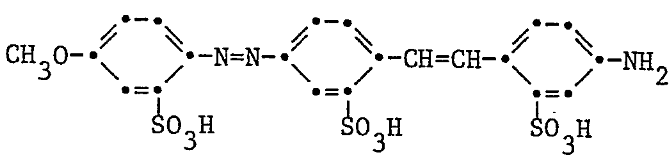

gelb

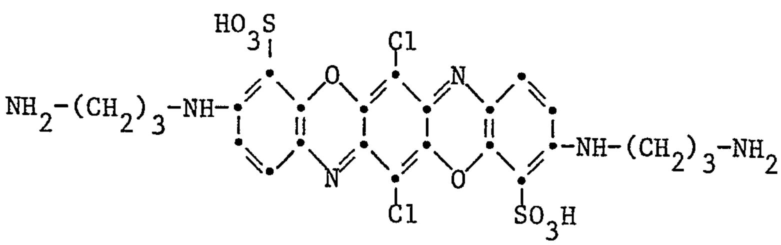

blau

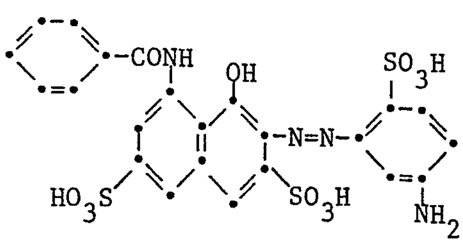

rot

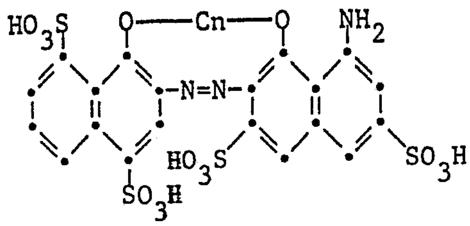

blau

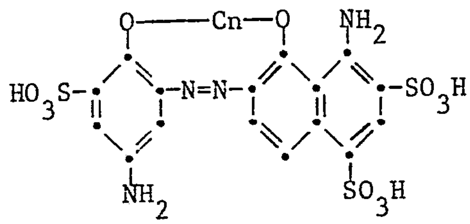

blau

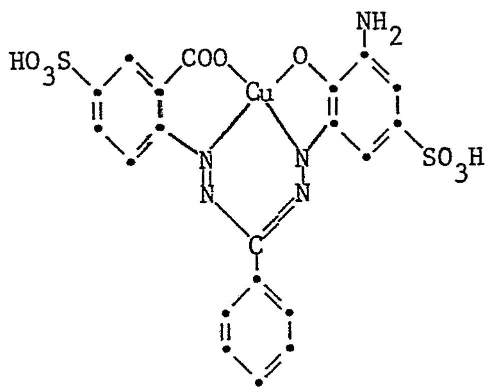

blau

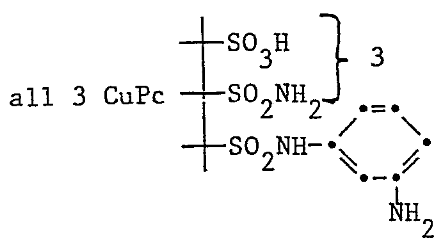

türkis

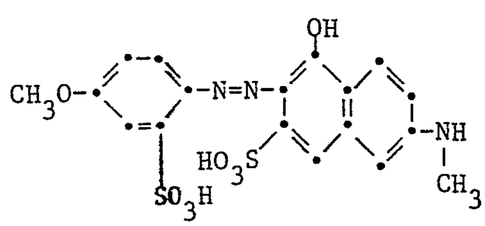

scharlach

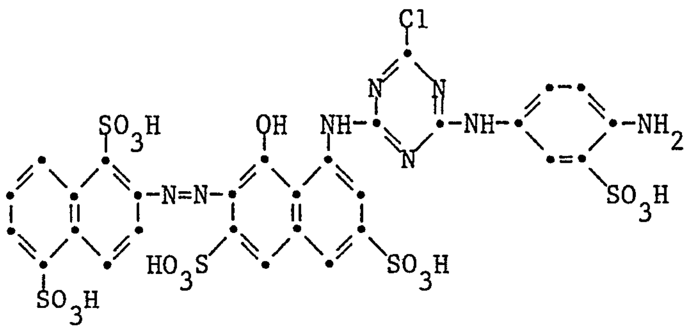

blaustichig rot

---

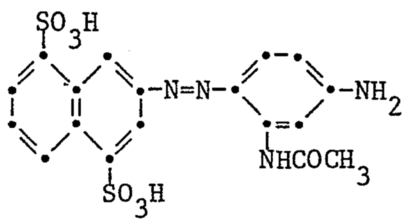

gelb

---

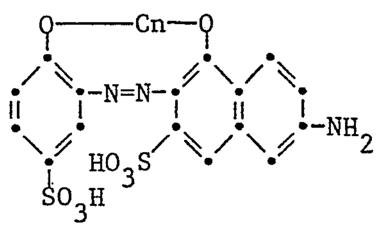

rubin

---

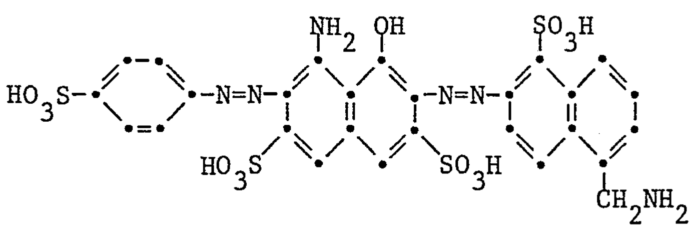

marineblau

---

Aehnliche Farbstoffe werden erhalten, wenn anstelle von 2-Methyl-5-methylsulfonyl-4,6-dichlorpyrimidin für die Acylierung der oben genannten aminogruppenhaltigen Chromophore äquivalente Mengen von 2-Isopropyl-5-äthylsulfonyl-4,6-dichlorpyrimidin, 2-Methyl-5-methylsulfonyl-4,6-difluorpyrimidin, 2-Methyl-5-methylsulfonyl-4,6-dibrompyrimidin, 2-Aethyl-5-methylsulfonyl-4,6-dichlor oder -difluorpyrimidin oder 2-Methyl-5-äthylsulfonyl-4,6-dichlor oder-difluorpyrimidin

verwendet werden.

Beispiel 3: 3,76 Teile 2,4-Diaminobenzol-sulfonsäure werden in 200 Teilen Wasser neutral gelöst und mit 6,6 Teilen Natriumacetat versetzt. Zu dieser Lösung gibt man hierauf bei Zimmertemperatur unter kräftigem Rühren eine Lösung von 5,3 Teilen 2-Methyl-5-methylsulfonyl-4,6-dichlorpyrimidin in 40 Teilen Aceton. Das auf dise Weise erhaltene Kondensationsprodukt der Formel

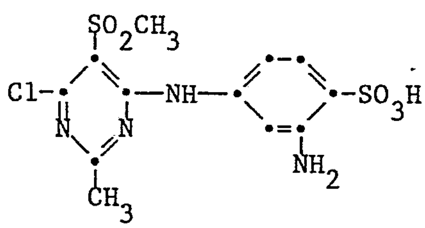

wird anschliessend in üblicher Weise diazotiert und mit einer sodaalkalischen Lösung von 1-(2',5'-Dichlor-phenyl)-3-methyl-pyrazolon-4'-sulfonsäure vereinigt.

Der so erhaltene Farbstoff färbt Baumwolle in grünstichig gelben Tönen.

Verwendet man anstelle des obigen Pyrazolons eine äquivalente Menge der in Kolonne I der folgenden Tabelle 2 angegebenen Kupplungskomponenten, so erhält man Farbstoffe, die Baumwolle in den in Kolonne II angegebenen Tönen färben.

Tabelle 2

| I | II |
| --- | --- |
| 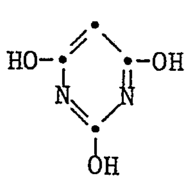 | grünstichig gelb |

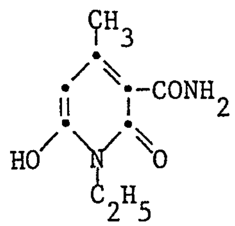

grünstichig gelb

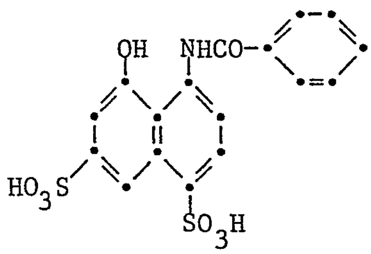

rot

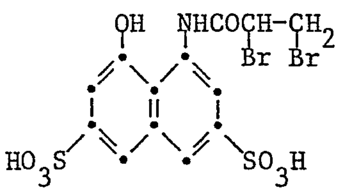

rot

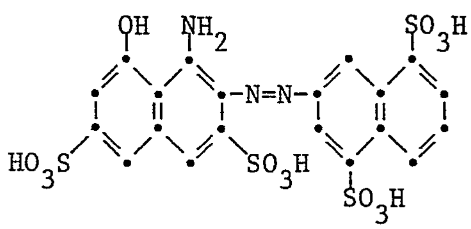

grünstichig marineblau

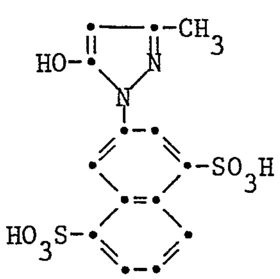

gelb

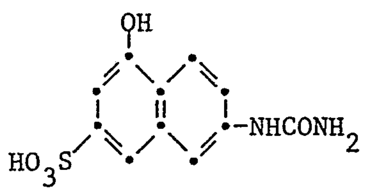

orange

---

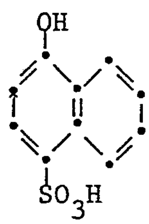

scharlach

---

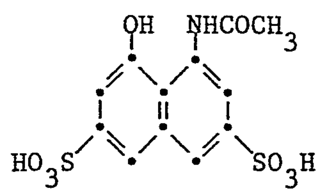

rot

---

Beispiel 4: Zu einer neutralen Lösung von 6,38 g Teilen 1-Amino-8-hydroxynaphthalin-3,6-disulfonsäure in 200 Teilen Wasser gibt man bei Zimmertemperatur unter kräftigem Eühren eine Lösung von 5,3 Teilen 2-Methyl-5-methylsulfonyl-4,6-dichlor-pyrimidin in 30 Teilen Aceton und hält das pH während der Kondensation durch Zutropfen von 1-n Natriumhydroxydlösung zwischen 5 und 7.

Die erhaltene Lösung der Kupplungskomponente der Formel

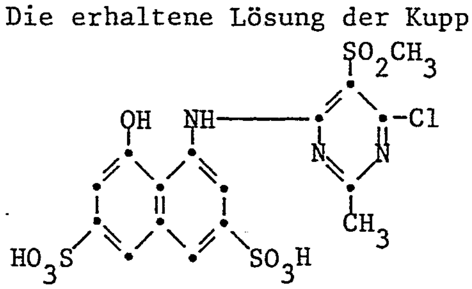

wird hierauf mit 4 Teilen Natriumbicarbonat versetzt. Nach Zugabe der aus 3,46 Teilen Orthanilsäure in übliche Weise hergestellten Diazoverbindung entsteht ein Farbstoff, der Baumwolle in roten Tönen färbt.

Verwendet man anstelle von diazotierter Orthanilsäure eine äquivalente Menge des Diazoniumsalzes der 2-Amino-naphthalin-1,5-disulfonsäure, so erhält man einen Farbstoff, der Baumwolle in blaustichig roten Tönen färbt.

Färbevorschrift I

2 Teile des gemäss Beispiel 2 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichtes zunimmt, und dann getrocknet.

Danach imprägniert man das Gewebe mit einer 20° warmen Lösung, die pro Liter 5 Gramm Natriumhydroxyd und 300 Gramm Natriumchlorid enthält, quetscht auf 75% Gewichtszunahme ab, dämpft die Färbung während 30 Sekunden bei 100° bis 101°, spült, seift während einer Viertelstunde in einer 0,3%igen kochenden Lösung eines ionenfreien Waschmittels, spült und trocknet.

Druckvorschrift

2 Teile des gemäss Beispiel 2 hergestellten Farbstoffes werden unter schnellem Rühren in 100 Teile einer Stammverdickung, enthaltend 45 Teile 5%ige Natriumalginatverdickung, 32 Teile Wasser, 20 Teile Harnstoff, 1 Teil m-nitrobenzolsulfonsaures Natrium sowie 2 Teile Natriumcarbonat, eingestreut.

Mit der so erhaltenen Druckpaste bedruckt man ein Baumwollgewebe auf einer Rouleauxdruckmaschine, trocknet und dämpft den erhaltenen bedruckten Stoff 2 bis 8 Minuten bei 100° in gesättigtem Dampf. Das bedruckte Gewebe wird dann in kaltem und heissem Wasser gründlich gespült, wobei sich die nicht chemisch fixierten Anteile sehr leicht von der Faser entfernen lassen, und anschliessend getrocknet.

Patentansprüche

1. Reaktivfarbstoffe der Formel

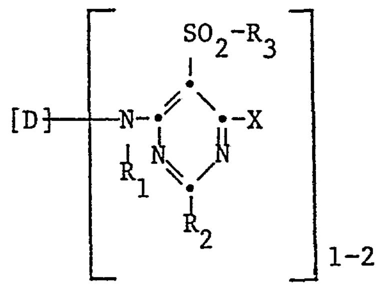

(1) ,

worin D der Rest eines organischen Farbstoffes der Mono- oder Polyazo-, Metallkomplexazo-, Anthrachinon-, Phthalocyanin-, Formazan-, Azomethin-, Nitroaryl-, Dioxazin-, Phenazin- oder Stilbenreihe, $R_1$ Wasserstoff oder gegebenenfalls substituiertes $C_1$-$C_4$-Alkyl, $R_2$ und $R_3$ unabhängig voneinander geradkettig oder verzweigtes $C_1$-$C_5$-Alkyl und X Fluor, Chlor oder Brom sind.

2. Reaktivfarbstoffe gemäss Anspruch 1 der Formel

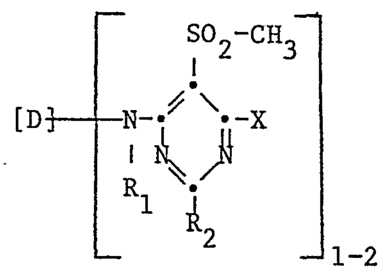

(2) ,

worin D, $R_1$, $R_2$ und X die in Anspruch 1 angegebenen Bedeutungen haben.

3. Reaktivfarbstoffe gemäss Anspruch 2, worin D, $R_1$ und $R_2$ die in Anspruch 2 angegebenen Bedeutungen haben, und X Chlor ist.

4. Reaktivfarbstoffe gemäss Anspruch 3, worin D, $R_1$ und X die in Anspruch 3 angegebenen Bedeutungen haben, und $R_2$ Methyl, Aethyl oder Isopropyl ist.

5. Reaktivfarbstoffe gemäss Anspruch 4, worin D, $R_1$ und X die in Anspruch 4 angegebenen Bedeutungen haben und $R_2$ Methyl ist.

6. Reaktivfarbstoffe gemäss Anspruch 2, worin D der Rest eines Mono- oder Disazofarbstoffes ist.

7. Reaktivfarbstoffe gemäss Anspruch 2, worin D der Rest eines Metallkomplexazofarbstoffes der Benzol- oder Naphthalinreihe ist und $R_1$, $R_2$ und X die in Anspruch 2 angegebenen Bedeutungen haben.

8. Reaktivfarbstoffe gemäss Anspruch 7, worin der Rest D ein 1:1-Kupferkomplexmonoazofarbstoff der Benzol- oder Naphthalinreihe ist, und das Kupferatom an jeweils eine metallisierbare Gruppe in ortho-Position zur Azobrücke gebunden ist und worin $R_1$ und $R_2$ die in Anspruch 7 angegebenen Bedeutungen haben und X Chlor ist.

9. Reaktivfarbstoffe gemäss Anspruch 3 der Formel

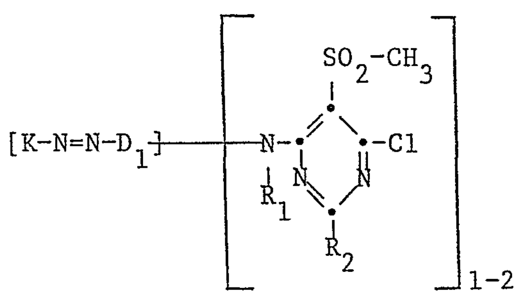

(3) ,

worin $D_1$ der Rest einer Diazokomponente der Benzol- oder Naphthalinreihe und K der Rest einer Kupplungskomponente der Benzol- oder Naphthalinreihe oder der heterocyclischen Reihe ist, und der Reaktivrest an die Diazokomponente oder an die Kupplungskomponente gebunden

ist, oder je ein Reaktivrest sowohl an die Diazokomponente als auch an die Kupplungskomponente gebunden ist und worin $R_1$ und $R_2$ die in Anspruch 3 angegebenen Bedeutungen haben.

10. Reaktivfarbstoffe gemäss Anspruch 1 der Formel

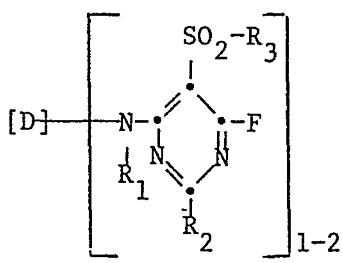

(4) ,

worin D, $R_1$, $R_2$ und $R_3$ die in Anspruch 1 angegebenen Bedeutungen haben.

11. Reaktivfarbstoffe gemäss Anspruch 10, worin D der Rest eines Mono- oder Disazofarbstoffes ist.

12. Reaktivfarbstoffe gemäss Anspruch 11 der Formel

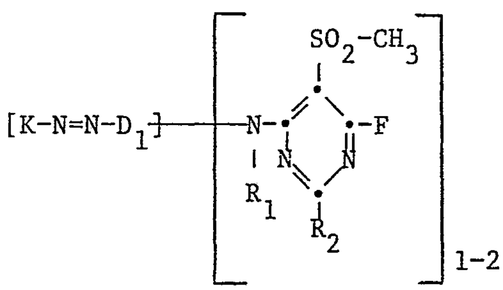

(5) ,

worin $D_1$ der Rest einer Diazokomponente der Benzol- oder Naphthalinreihe und K der Rest einer Kupplungskomponente der Benzol- oder Naphthalinreihe oder der heterocyclischen Reihe ist, und $R_1$ Wasserstoff oder gegebenenfalls substituiertes $C_1$-$C_4$-Alkyl und $R_2$ geradkettig oder verzweigtes $C_1$-$C_5$-Alkyl ist, und der Reaktivrest an die Diazokomponente oder an die Kupplungskomponente oder aber je ein Reaktivrest sowohl an die Diazokomponente als auch an die Kupplungskomponente gebunden ist.

13. Reaktivfarbstoffe gemäss Anspruch 12, worin $D_1$, K und $R_1$ die in Anspruch 12 angegebenen Bedeutungen haben und $R_2$ Methyl, Aethyl oder Isopropyl ist.

14. Reaktivfarbstoffe gemäss Anspruch 13, worin $D_1$, R und $R_1$ die in Anspruch 13 angegebenen Bedeutungen haben und $R_2$ Methyl ist.

15. Reaktivfarbstoffe gemäss den Ansprüchen 6 und 11, worin der Rest D als Substituenten $C_1$-$C_4$-Alkyl, $C_1$-$C_4$-Alkoxy, $C_1$-$C_6$-Acylamino, Amino, Alkoxycarbonyl, Nitro, Cyano, Acetyl, Trifluormethyl, Halogen, Sulfamoyl, Carbamoyl, Ureido, Hydroxy, Carboxy, Sulfomethyl und Sulfo enthalten kann.

16. Reaktivfarbstoffe gemäss Anspruch 15, worin der Rest D als Substituenten Methyl, Aethyl, Methoxy, Benzoylamino, Amino, Ureido, Hydroxy, Sulfomethyl und Sulfo enthalten kann.

17. Der Reaktivfarbstoff gemäss Anspruch 9 der Formel

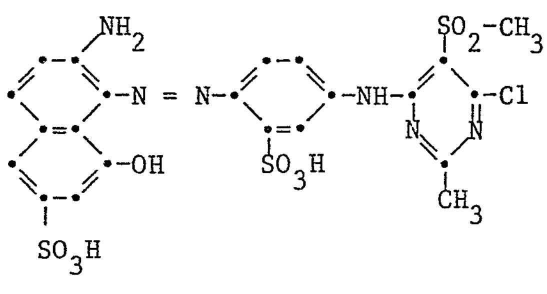

(6) .

18. Verfahren zur Herstellung von Reaktivfarbstoffen der Formel

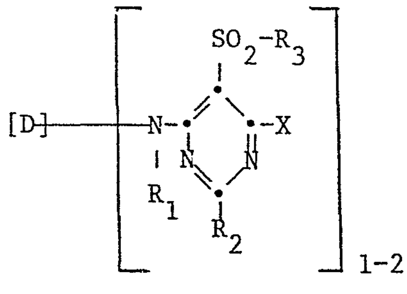

(1) ,

worin D der Rest eines organischen Farbstoffes der Mono- oder Polyazo-, Metallkomplexazo-, Anthrachinon-, Phthalocyanin-, Formazan-, Azomethin-, Nitroaryl-, Dioxazin-, Phenazin- oder Stilbenreihe, $R_1$ Wasserstoff oder gegebenenfalls substituiertes $C_1$-$C_4$-Alkyl, $R_2$ und $R_3$ unabhängig voneinander geradkettig oder verzweigtes $C_1$-$C_5$-Alkyl und X Fluor, Chlor oder Brom ist, dadurch gekennzeichnet, dass man organische Farbstoffe der Formel

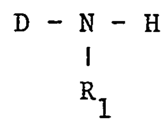
(7)

oder Farbstoffvorprodukte mit mindestens einem Aequivalent einer Verbindung der Formel

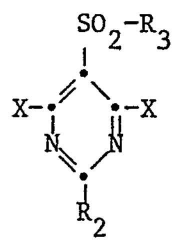
(8) ,

wobei D, $R_1$, $R_2$, $R_3$ und X in den Formeln (7) und (8) die unter Formel (1) angegebenen Bedeutungen haben, zu einem Reaktivfarbstoff der Formel (1) kondensiert, und dass man im Falle der Verwendung von Farbstoffvorprodukten, diese in die gewünschten Endfarbstoffe umwandelt.

19. Verfahren gemäss Anspruch 18, zur Herstellung von Reaktivfarbstoffen der Formel (1), dadurch gekennzeichnet, dass man eine Komponente des Farbstoffes der Formel (7), die eine $-\underset{R_1}{\underset{|}{N}}H$-Gruppe enthält, mit einer Verbindung der Formel (8) kondensiert und dann mit der anderen Komponente des Farbstoffes der Formel (7) umsetzt.

20. Verfahren gemäss Anspruch 18, zur Herstellung von Reaktivfarbstoffen der Formel

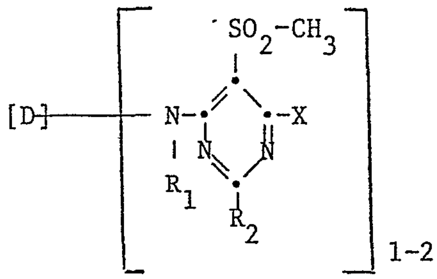

(2) ,

worin D, $R_1$, $R_2$ und X die in Anspruch 18 angegebenen Bedeutungen haben, dadurch gekennzeichnet, dass man organische Farbstoffe der Formel (7) mit mindestens einem Aequivalent einer Verbindung der Formel

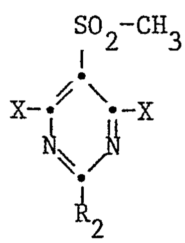

(9) ,

worin $R_2$ und X die in Anspruch 18 angegebenen Bedeutungen haben, kondensiert.

21. Verfahren gemäss Anspruch 20, dadurch gekennzeichnet, dass man organische Farbstoffe der Formel (7), worin D und $R_1$ die in Anspruch 20 angegebenen Bedeutungen haben, mit einer Verbindung der Formel

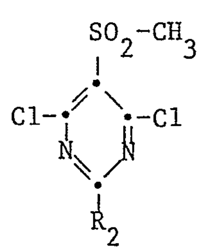

(10) ,

worin $R_2$ die in Anspruch 20 angegebene Bedeutung hat, kondensiert.

22. Verfahren gemäss Anspruch 21, dadurch gekennzeichnet, dass man organische Farbstoffe der Formel (7), worin D und $R_1$ die in Anspruch 21 angegebenen Bedeutungen haben, mit einer Verbindung der Formel (10), worin $R_2$ Methyl, Aethyl oder Isopropyl ist, kondensiert.

23. Verfahren gemäss Anspruch 22, dadurch gekennzeichnet, dass man organische Farbstoffe der Formel (7), worin D und $R_1$ die in Anspruch 22 angegebenen Bedeutungen haben, mit einer Verbindung der Formel (10), worin $R_2$ Methyl ist, kondensiert.

24. Verfahren gemäss Anspruch 20, dadurch gekennzeichnet, dass man Verbindungen der Formel (7), worin D der Rest eines Mono- oder Disazofarbstoffes ist, mit mindestens einem Aequivalent der Verbindung der Formel (9) kondensiert, und wobei $R_1$, $R_2$ und X in den Formeln (7) und (9) die in Anspruch 20 angegebenen Bedeutungen haben.

25. Verfahren gemäss Anspruch 19, dadurch gekennzeichnet, dass man eine Diazokomponente des Farbstoffes, die eine $-\underset{R_1}{\underset{|}{N}}H-$Gruppe enthält,

mit einer Verbindung der Formel (8), worin $R_2$ und $R_3$ unabhängig voneinander geradkettig oder verzweigtes $C_1-C_5$-Alkyl und X Fluor, Chlor oder Brom ist, kondensiert, das erhaltene Kondensationsprodukt diazotiert und auf eine Kupplungskomponente kuppelt.

26. Verfahren gemäss Anspruch 19, dadurch gekennzeichnet, dass man eine Kupplungskomponente des Farbstoffes, die eine $-\underset{R_1}{\underset{|}{N}}H-$Gruppe enthält,

mit einer Verbindung der Formel (8), worin $R_2$ und $R_3$ unabhängig voneinander geradkettig oder verzweigtes $C_1-C_5$-Alkyl und X Fluor, Chlor oder Brom ist, kondensiert, und auf das so erhaltene Kondensationsprodukt eine diazotierte Diazokomponente kuppelt.

27. Verfahren gemäss Anspruch 19, dadurch gekennzeichnet, dass man eine Diazokomponente, die eine $-\underset{R_1}{\mathrm{N}}\mathrm{H}-$Gruppe enthält, mit einer Verbindung der Formel (8), worin $R_2$ und $R_3$ unabhängig voneinander geradkettig oder verzweigtes $C_1$-$C_5$-Alkyl und X Fluor, Chlor oder Brom ist, kondensiert, dass man ferner eine Kupplungskomponente, die eine $-\underset{R_1}{\mathrm{N}}\mathrm{H}-$Gruppe enthält, mit einer Verbindung der Formel (8), worin $R_2$ und $R_3$ unabhängig voneinander geradkettig oder verzweigtes $C_1$-$C_5$-Alkyl und X Fluor, Chlor oder Brom ist, kondensiert, und dass man das Kondensationsprodukt der Diazokomponente diazotiert und auf das Kondensationsprodukt der Kupplungskomponente kuppelt, wobei $R_1$, $R_2$, $R_3$ und X im Kondensationsprodukt der Diazokomponente unabhängig ist von $R_1$, $R_2$, $R_3$ und X im Kondensationsprodukt der Kupplungskomponente.

28. Verfahren gemäss Anspruch 20, zur Herstellung von Reaktiv-Metallkomplexazofarbstoffen, dadurch gekennzeichnet, dass man Verbindungen der Formel (7), worin D der Rest eines Azofarbstoffes der Benzol- oder Naphthalinreihe ist, der metallisierbare Gruppen enthält, mit mindestens einem Aequivalent der Verbindung der Formel (9) und mit schwermetallabgebenden Mitteln umsetzt, und wobei $R_1$, $R_2$ und X in den Formeln (7) und (9) die in Anspruch 20 angegebenen Bedeutungen haben.

29. Verfahren gemäss Anspruch 28, zur Herstellung von Reaktiv-Metallkomplexazofarbstoffen, dadurch gekennzeichnet, dass man Verbindungen der Formel (7), worin D der Rest eines Monoazofarbstoffes der Benzol- oder Naphthalinreihe ist, der metallisierbare Gruppen in ortho-Position zur Azobrücke enthält und worin $R_1$ die in Anspruch 28 angegebene Bedeutung hat, mit einer Verbindung der Formel (9), worin $R_2$ die in

Anspruch 28 angegebene Bedeutung hat und X Chlor ist, und mit kupferabgebenden Mitteln in beliebiger Reihenfolge zu einem 1:1-Kupferkomplexazofarbstoff umsetzt.

30. Verfahren gemäss Anspruch 24, dadurch gekennzeichnet, dass man organische Farbstoffe der Formel

$$[K{-}N{=}N{-}D_1]\!-\![NH{-}R_1]_{1-2} \qquad (11) \quad ,$$

worin $D_1$ der Rest einer Diazokomponente der Benzol- oder Naphthalinreihe und K der Rest einer Kupplungskomponente der Benzol- oder Naphthalinreihe oder der heterocyclischen Reihe und $R_1$ Wasserstoff oder $C_1$-$C_4$-Alkyl ist, mit Verbindungen der Formel (9), worin X Chlor ist und $R_2$ die in Anspruch 24 angegebene Bedeutung hat, kondensiert, wobei die Kondensation an der $\underset{\substack{|\\R_1}}{N}H$-Gruppe der Diazokomponente oder an der $-\underset{\substack{|\\R_1}}{N}H$-Gruppe der Kupplungskomponente erfolgt, oder mit zwei Verbindungen der Formel (9), worin X Chlor ist und $R_2$ die in Anspruch 24 angegebene Bedeutung hat, kondensiert, wobei die Kondensation an der $-\underset{\substack{|\\R_1}}{N}H$-Gruppe der Diazokomponente und an der $-\underset{\substack{|\\R_1}}{N}H$-Gruppe der Kupplungskomponente erfolgt.

31. Verfahren gemäss Anspruch 18, zur Herstellung von Reaktivfarbstoffen der Formel

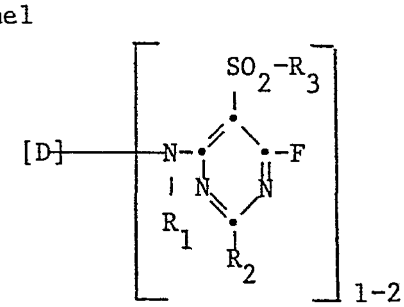

(4) ,

0054515



worin D, $R_1$, $R_2$ und $R_3$ die in Anspruch 18 angegebenen Bedeutungen haben, dadurch gekennzeichnet, dass man organische Farbstoffe der Formel

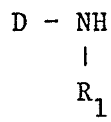

(7)

oder Farbstoffvorprodukte mit Verbindungen der Formel

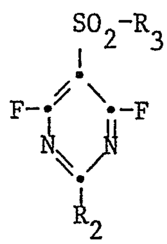

(12)

kondensiert, und dass man im Falle der Verwendung von Farbstoffvorprodukten, diese in die gewünschten Endfarbstoffe umwandelt.

32. Verfahren gemäss Anspruch 31, dadurch gekennzeichnet, dass man Verbindungen der Formel (7), worin D der Rest eines Mono- oder Disazofarbstoffes ist, mit mindestens einem Aequivalent einer Verbindung der Formel (12) kondensiert.

33. Verfahren gemäss Anspruch 32, zur Herstellung von Reaktivfarbstoffen der Formel

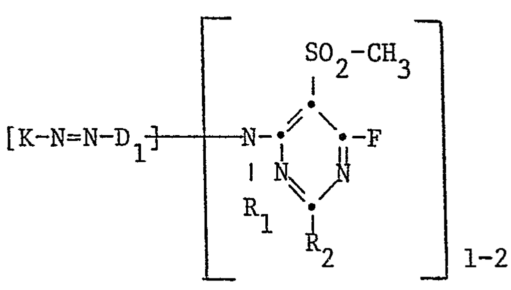

(5) ,

worin $D_1$ der Rest einer Diazokomponente der Benzol- oder Naphthalinreihe und K der Rest einer Kupplungskomponente der Benzol- oder

Naphthalinreihe oder der heterocyclischen Reihe ist, und $R_1$ Wasserstoff oder gegebenenfalls substituiertes $C_1$-$C_4$-Alkyl und $R_2$ geradkettig oder verzweigtes $C_1$-$C_5$-Alkyl ist, dadurch gekennzeichnet, dass man einen organischen Farbstoff der Formel

$$[K-N=N-D_1]-[NH-R_1]_{1-2} \qquad (11)$$

mit Verbindungen der Formel

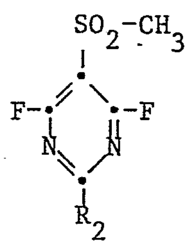

(13) ,

worin K, D, $R_1$ und $R_2$ in den Formeln (11) und (13) die unter Formel (5) angegebenen Bedeutungen haben, kondensiert, wobei die Kondensation an der $-\underset{R_1}{N}H-$Gruppe der Diazokomponente oder an der $-\underset{R_1}{N}H-$Gruppe der Kupplungskomponente erfolgt, oder mit zwei Verbindungen der Formel (13), worin $R_2$ die unter Formel (5) angegebene Bedeutung hat, kondensiert, wobei die Kondensation an der $-\underset{R_1}{N}H-$Gruppe der Diazokomponente und an der $-\underset{R_1}{N}H-$Gruppe der Kupplungskomponente erfolgt.

34. Verfahren gemäss Anspruch 33, dadurch gekennzeichnet, dass man Verbindungen der Formel (11), worin $D_1$, K und $R_1$ die in Anspruch 33 angegebenen Bedeutungen haben, mit mindestens einem Aequivalent einer Verbindung der Formel (13), worin $R_2$ Methyl, Aethyl oder Isopropyl ist, kondensiert.

35. Verfahren gemäss Anspruch 34, dadurch gekennzeichnet, dass man Verbindungen der Formel (11), worin $D_1$, K und $R_1$ die in Anspruch 34 angegebenen Bedeutungen haben, mit mindestens einem Aequivalent einer Verbindung der Formel (13), worin $R_2$ Methyl ist, kondensiert.

36. Verfahren gemäss den Ansprüchen 24 und 32, dadurch gekennzeichnet, dass man Verbindungen der Formel (7), worin der Rest D als Substituenten $C_1$-$C_4$-Alkyl, $C_1$-$C_4$-Alkoxy, $C_1$-$C_6$-Acylamino, Amino, Alkoxycarbonyl, Nitro, Cyano, Acetyl, Trifluormethyl, Halogen, Sulfamoyl, Carbamoyl, Ureido, Hydroxy, Carboxy, Sulfomethyl und Sulfo enthalten kann, als Ausgangsstoffe verwendet.

37. Verfahren gemäss Anspruch 36, dadurch gekennzeichnet, dass man Verbindungen der Formel (7), worin der Rest D als Substituenten Methyl, Aethyl, Methoxy, Benzoylamino, Amino, Ureido, Hydroxy, Sulfomethyl und Sulfo enthalten kann, als Ausgangsstoffe verwendet.

38. Verfahren gemäss Anspruch 30, zur Herstellung des Reaktivfarbstoffes der Formel

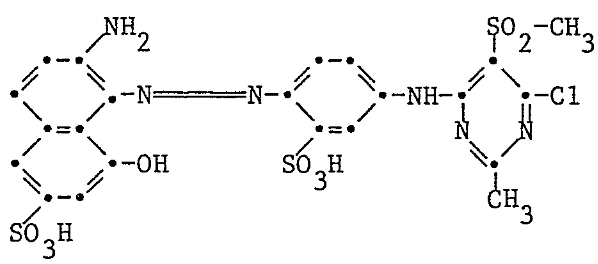

(6) ,

dadurch gekennzeichnet, dass man den durch Kupplung von diazotierter 1-Amino-4-acetylaminobenzol-6-sulfonsäure auf 2-Amino-8-hydroxynaphthalin-6-sulfonsäure und anschliessender Verseifung der Acetylaminogruppe erhaltenen Azofarbstoff mit 4,6-Dichlor-2-methyl-5-methylsulfonylpyrimidin kondensiert.

39. Die gemäss den Beispielen erhaltenen Reaktivfarbstoffe.

40. Verfahren gemäss den angegebenen Beispielen.

41. Die gemäss den Ansprüchen 18 bis 38 erhältlichen Farbstoffe.

42. Verfahren gemäss den Färbe- und Druckbeispielen.

43. Verwendung der Reaktivfarbstoffe gemäss den Ansprüchen 1 bis 17 bzw. der gemäss den Ansprüchen 18 bis 38 erhaltenen Reaktivfarbstoffe zum Färben und Bedrucken.

44. Verfahren zum Färben und Bedrucken unter Verwendung der Farbstoffe gemäss Anspruch 1.

45. Verfahren gemäss Anspruch 44 zum Färben von Cellulosefasern.

46. Färbe- bzw. Druckpräparate, die Farbstoffe gemäss den Ansprüchen 1 bis 17 enthalten.

47. Das gemäss Anspruch 45 oder 46 gefärbte oder bedruckte Material, insbesondere das Textilmaterial.

0054515

Europäisches Patentamt

# EUROPÄISCHER RECHERCHENBERICHT

Nummer der Anmeldung

EP 81 81 0491

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | FR - A - 2 390 478 (CIBA-GEIGY)<br>* Anspruch 1 *<br>& DE - A - 2 819 787<br>-- | 1 |
| A | FR - A - 1 466 567 (BAYER)<br>* Zusammenfassung A 50° und 53° *<br>& DE - A - 1 544 542<br>& DE - A - 1 544 512<br>& DE - A - 1 544 499<br>& DE - A - 1 544 517<br>---- | 1 |

KLASSIFIKATION DER ANMELDUNG (Int. Cl.³)

C 09 B 62/20
D 06 P 1/38

RECHERCHIERTE SACHGEBIETE (Int. Cl.³)

C 09 B 62/00

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 04-03-1982 | GINESTET |